# EUROPEAN PATENT APPLICATION

(11) **EP 4 292 860 A1**
(43) Date of publication of application: **20.12.2023**
(21) Application number: 22179076.9
(22) Date of filing: 15.06.2022
(51) Int. Cl.: B60L 3/00, B60L 58/10

(54) **METHODS, AN EXTERNAL BATTERY MONITORING MODULE AND AN EXTERNAL BATTERY MONITORING SYSTEM FOR OBTAINING ONE OR MORE BATTERY PARAMETER VALUES AND/OR FOR INDICATING IF A CRITICAL CONDITION IS PRESENT FOR AT LEAST ONE PROPULSION BATTERY**

(71) Applicant: Scania CV AB, 151 87 Södertälje (SE)
(72) Inventor: BJURSTRÖM, Ulf, 132 31 Saltsjö-Boo (SE)
(74) Representative: Scania CV AB

(57) **Abstract**

Methods for obtaining one or more battery parameter values for a propulsion battery and for indicating if a critical condition is present the propulsion battery, and corresponding for external battery monitoring modules and systems are presented. An external battery monitoring module is arranged for obtaining one or more battery parameter values for a propulsion battery of a vehicle, where the vehicle comprises one or more propulsion batteries providing electrical energy to at least one electrical machine, and one or more system batteries providing electrical energy to one or more electrical systems of the vehicle.

The method of the external battery monitoring module comprises the following steps, performed when an onboard battery monitoring system, comprised in the one or more electrical systems, is unable to monitor a current condition of the propulsion battery:
- providing electrical energy from the external battery monitoring module to a control unit of the propulsion battery, thereby energizing the control unit;
- obtaining, from the energized control unit, one or more battery parameter values for the propulsion battery, the one or more battery parameter values being usable for determining if a critical condition is present for the propulsion battery.

## Description

### Technical field

The present invention relates to indication of if a critical condition is present for at least one propulsion battery of a vehicle, and in particular to methods, an external battery monitoring module arranged for obtaining one or more battery parameter values for a propulsion battery, and an external battery monitoring system arranged for indicating if a critical condition is present for at least one propulsion battery. The present invention also relates to a computer program and a computer-readable medium that implement the methods according to the invention.

### Background

The following background description constitutes a description of the background to the present invention, which does not, however, necessarily have to constitute prior art.

Batteries are commonly used in vehicles today. One or more system batteries may be used for electrifying, i.e. for providing electrical energy to, one or more electrical systems in the vehicle. Such electrical systems may include for example various control systems, heating or cooling systems, driver interfaces, or essentially any other system driven by electricity, in the vehicle. In vehicles propelled by one or more electrical machines, propulsion batteries, also known as traction batteries, provide electrical energy to the electrical machines. This electrical energy then causes the movement of the vehicle, i.e. the batteries are utilized for propelling the vehicle, via the electrical machines.

Passenger cars may comprise one or more propulsion batteries that are not easy to reach. Commercial and/or heavy vehicles, such as trucks or buses, may comprise a number of propulsion batteries that are often spread over various parts of the vehicle. Some of these propulsion batteries are easily accessible from the outside of the vehicle, whereas some of the propulsion batteries are harder to access from the outside. Sometimes partial disassembly of the vehicle, or usage of destructive tooling, may be necessary for quickly accessing some of the propulsion batteries. For commercial vehicles, the battery accessibility may depend on a number of factors, such as e.g. the basic design of the vehicle, the chassis construction, the driver cab construction, and the bodybuild construction, and may also differ between vehicle individuals.

The state/status/condition of a propulsion battery is conventionally monitored by an onboard battery monitoring system (BMS), i.e. by a monitoring system arranged internally in the vehicle. The onboard battery monitoring system is included in the one or more electrical systems of the vehicle, possibly as part of the vehicle control system, and is arranged for monitoring certain battery parameters in order to be able to determine the current state of the propulsion vehicle battery under normal operation of the vehicle and its one or more batteries.

### Brief description of the invention

A conventional onboard battery monitoring system works fine in normal situations, i.e. when the vehicle, its one or more system batteries, and also its electrical and control systems are functioning normally.

However, in some other situations, i.e. during exceptional or extreme situations, such as after an accident or during a fire in the vehicle, the conventional onboard battery monitoring system will not be able to monitor a current condition of the propulsion battery.

Such other situations may occur if at least one of the system batteries, or if one or more of the electrical systems in the vehicle are mechanically or electrically disabled. Also, the conventional onboard battery monitoring system will not be able to monitor a current condition if at least one of the propulsion batteries are disabled, or if at least one propulsion battery control system is disabled. In this document, an entity being disabled means that the entity is not working properly, and is not able to perform its normal task, including the entity being more or less damaged/inoperable/broken/out of order.

Further, such other situations may occur if the onboard battery monitoring system is uncapable to monitor a specific condition of the propulsion battery, which may, for example, be the case if it is unable to electrify a control unit comprised in the propulsion battery and/or unable to communicate with the control unit.

Obviously, the conventional onboard battery monitoring system will also not be able to monitor a current condition of the propulsion battery if the propulsion battery is disconnected from the electrical vehicle systems and/or is physically separated/removed from the vehicle.

As mentioned above, if the vehicle has been involved in an accident, or if there is, or has been, a fire in the vehicle, the one or more system or propulsion batteries, as well as one or more of the electrical, control and/or monitoring systems of the vehicle may be more or less disabled. The conventional battery monitoring, utilizing a conventionally onboard internal battery monitoring system, will then not work properly.

A non-working conventionally onboard internal battery monitoring system could cause severe danger, because in situations as the ones mentioned above, it may be crucial to quickly determine a state of the propulsion batteries. For example, heating of the propulsion batteries may cause thermal runaway/meltdown of the batteries, which could result in an explosive fire, which thereafter is almost impossible to stop due to built in fuel and oxygen in the vehicle. For example, rescue personnel, such as police and medical personnel, might thus be exposed to serious safety hazards when assisting drivers and/or passengers in such situations.

Also, personnel transporting the vehicle and/or the propulsion batteries after an accident and/or a fire might be exposed to corresponding safety hazards.

Generally, a damaged propulsion battery could, at essentially any time, turn into a safety threat for the person handling the battery, or being close to the battery. If the propulsion battery is located within a vehicle, the battery might start an uncontrollable fire in the battery itself, in adjacent batteries and/or in other parts of the vehicle, including e.g. fuel tanks. Correspondingly, if the propulsion battery is located outside/external from the vehicle, e.g. in a warehouse, the battery might itself start burning, and may also set adjacent batteries, or other goods, on fire.

In all such situations, conventional onboard battery monitoring systems are useless, because they do not work at all. For example, a police officer arriving at a crashed and/or burning vehicle, with disabled batteries, or disabled electrical or control systems, has no way of knowing it there is a potential danger for that a propulsion battery could initiate an explosive fire or not. Also, transport personnel transporting propulsion batteries and/or the vehicle away from an accident location is unaware of if they are transporting a potential safety hazard on the streets. Also, it is impossible for a warehouse personnel to determine if a damaged propulsion battery standing on a shelf is a potential fire hazard by usage of a conventional battery monitoring system, since the battery is then located offboard, and is not connected to the battery monitoring system at all.

It is therefore an objective of the present invention to provide methods, an external battery monitoring module, and an external battery monitoring system arranged for obtaining crucial battery parameter values and indicating if a critical condition is present for at least one propulsion battery of a vehicle that work in such situations, i.e. when an onboard battery monitoring system is unable to monitor a current condition of the at least one propulsion battery, such that these problems are at least partly solved.

According to an aspect of the present invention, this objective is achieved through a method to be performed by an external battery monitoring module for obtaining one or more battery parameter values for a propulsion battery of a vehicle, the vehicle comprising one or more propulsion batteries providing electrical energy to at least one electrical machine, and one or more system batteries providing electrical energy to one or more electrical systems of the vehicle;
the method comprising the following steps, performed when an onboard battery monitoring system, comprised in the one or more electrical systems, is unable to monitor a current condition of the propulsion battery:
- providing electrical energy from the external battery monitoring module to a control unit of the propulsion battery, thereby energizing the control unit;
- obtaining, from the energized control unit, one or more battery parameter values for the propulsion battery, the one or more battery parameter values being usable for determining if a critical condition is present for the propulsion battery.

By utilizing the method of the external battery monitoring module, it is possible for e.g. rescue, transport and/or warehouse personnel to determine a state of the propulsion battery when one or more of the system batteries, one or more of the electrical vehicle systems, or one or more of the systems for electrifying, controlling or monitoring the propulsion battery or for communication with the propulsion battery, are disabled. For example, when the propulsion battery is disabled/damaged, it may be impossible for the onboard battery monitoring system to electrify the propulsion battery, to communicate with the propulsion battery and/or to monitor battery parameters and/or conditions for the propulsion batteries. Further, the state of the propulsion battery may also be determined when the propulsion battery is offboard, i.e. is physically separated from the vehicle, or when the propulsion battery is detached from the electrical systems of the vehicle.

Thus, by utilization of the herein presented aspects and embodiments, one or more battery parameter may be obtained, that are useful for determining the condition of the propulsion battery, and for detecting a possible safety hazard, even though the onboard battery monitoring system is unable to monitor the current condition of the propulsion battery. Safety critical battery parameter values may hereby be monitored for propulsion batteries in commercial or non-commercial vehicles, to prevent dangerous situations and to enhance safety.

This may be achieved in situations where conventional onboard battery monitoring is impossible to provide, since the propulsion battery is either damaged itself or is impossible to be analyzed by the onboard conventional battery monitoring systems, since the electrical and/or control systems are at least partly disabled, for example due to discharged or disabled system batteries. By utilizing the method, it is also possible to determine a state of the propulsion battery although a driver compartment of the vehicle is not possible to access and/or if a driver interface, such an instrument cluster, is blocked or out of order.

In other words, the usage external battery monitoring module facilitates determination of the state of the battery in situations including emergencies, such as vehicle accidents, vehicle fires, battery fires, or the like. The external battery monitoring module is then connected to the propulsion battery, instead of the onboard battery monitoring system normally being connected to the propulsion battery, whereafter the external battery monitoring module takes over the communication with the propulsion battery and also takes over the battery monitoring.

To be able to quickly detect safety hazards for a damaged propulsion battery is crucial for rescue, transport and/or warehouse personnel, since rapid fires and even explosions may be avoided by such a detection. Thus, the risk for both material and human damages is reduced by the herein described aspects and embodiments.

To be able to determine if a critical condition is present for offboard batteries, both new and used batteries, is also important, for example during long time storage of batteries in warehouses, shops or the like, since it prevents installing a poor-conditioned or non-working battery in a vehicle, and thereby also reduces the risk for Vehicle Off Road (VOR) time. It is also important to be able to determine the state of charge for batteries during long term storage of new and used batteries. The presented method makes it also possible to perform such determinations.

According to an embodiment of the present invention, the onboard battery monitoring system is unable to monitor the current condition of the propulsion battery because of one or more in the group of:
- at least one of the one or more electrical systems is mechanically disabled;
- at least one of the one or more electrical systems is electrically disabled;
- at least one of the one or more system batteries is disabled;
- at least one propulsion battery control system, comprised in the one or more electrical systems, is disabled;
- the onboard battery monitoring system is unable to communicate with the control unit of the propulsion battery;
- the onboard battery monitoring system is unable to electrify the control unit of the propulsion battery;
- the onboard battery monitoring system is uncapable to monitor a specific condition of the propulsion battery;
- the propulsion battery is disconnected from the one or more electrical systems; and
- the propulsion battery is physically separated from the vehicle.

The herein presented methods for obtaining battery parameter values for a propulsion battery, that van be used for determining if a critical condition is present and for indicating this critical condition, may thus be useful in a large number of varying situations for which the normally used onboard battery monitoring system cannot monitor a current condition of the propulsion battery. The herein presented methods are applicable, and may reduce the risk for hazard and injuries, in many potentially dangerous situations.

According to an embodiment of the present invention, the one or more battery parameter values comprise one or more values in the group of:
- a temperature for the propulsion battery;
- a change in temperature for the propulsion battery;
- a voltage over the propulsion battery;
- a change of voltage over the propulsion battery;
- an insulation resistance for the propulsion battery; and
- a change of insulation resistance for the propulsion battery.

Since the external battery monitoring module is able to obtain/receive/read out a number of battery parameter values, including temperature, voltage and/or resistance values from the monitored propulsion battery, a number of different analysis methods, possibly based on different values, may be used for detecting if a critical condition is present for the propulsion battery. Hereby, a robust detection of a number of critical battery conditions is made possible.

According to an embodiment of the present invention, the electrical energy is provided to the control unit from at least one source in the group of:
- a module battery, arranged within the external battery monitoring module; and
- an external battery, arranged offboard the vehicle and connected to the external battery monitoring module, such that the electrical energy is provided to the control unit via the external battery monitoring module.

Hereby, the electrical energy used for energizing the control unit of the propulsion battery to be monitored may come from two different energy sources. This creates a flexibility for the design of the external battery monitoring module, since the electrical energy may be provided at least partly from an external battery outside of the module itself. The external battery monitoring module may therefore be small in size and less costly to produce. Also, the capacity of the module battery and/or the external battery may be optimized for various implementations.

According to an embodiment of the present invention, the method further comprises the step of:
- providing the obtained one or more battery parameter values to a display device, such that the display device can determine if a critical condition is present for the propulsion battery based on the obtained one or more battery parameter values.

Thus, the detection of critical a possible condition is here at least partly performed by the display device. Hereby, the computational complexity for the detection of a critical condition is allocated in the display device instead of in the external battery monitoring module, which makes a smaller, lighter, less complex and less battery consuming design of the module possible.

According to an embodiment of the present invention, the method further comprises the step of:
- determining if a critical condition is present for the propulsion battery based on the obtained one or more battery parameter values.

Thus, the detection of critical condition is here at least partly performed by the external battery monitoring module. Hereby, the external battery monitoring module may itself detect and indicate a critical condition, which could reduce the risk for injury of rescue personnel located at the vehicle or propulsion battery. The rescue personnel could here receive an early warning directly from the module when connecting it to the propulsion battery, such that they can remove themselves from the vehicle or propulsion battery.

According to an embodiment of the present invention, the method further comprises at least one step in the group of:
- providing information related to if a critical condition is present for the propulsion battery to a display device, such that the display device can indicate a determined critical condition; and
- indicating a determined critical condition for the propulsion battery.

Hereby, the detected critical condition may be indicated by the external battery monitoring module and/or by the display device, based on the specific use situation. This results in a flexible system being useable in many different situations, where the size, weight, complexity and cost of the external battery monitoring module may be chosen specifically for its intended application.

According to an aspect of the present invention, the above mentioned objective is also achieved through a method to be performed by an external battery monitoring system including at least one external battery monitoring module and at least one display device, for indicating if a critical condition is present for at least one propulsion battery of a vehicle, the vehicle comprising one or more propulsion batteries providing electrical energy to at least one electrical machine, and one or more system batteries providing electrical energy to one or more electrical systems of the vehicle;
the method being performed when an onboard battery monitoring system, comprised in the one or more electrical systems, is unable to monitor a current condition of the at least one propulsion battery, and comprising:
- performing, by usage of the at least one external battery monitoring module, the steps of the herein described method, for obtaining one or more battery parameter values for at least one propulsion battery, respectively;
- determining, by usage of one or more of the at least one external battery monitoring module and the at least one display device, if a critical condition is present for the at least one propulsion battery, based on the obtained one or more battery parameter values, respectively; and
- indicating, by usage of one or more of the at least one external battery monitoring module and the at least one display device, a determined critical condition for the at least one propulsion battery, respectively.

The presented method of the external battery monitoring system for indicating if a critical condition is present for at least one propulsion battery may be used essentially any time when an onboard battery monitoring system is unable to monitor the current condition of the at least one propulsion battery, i.e. when the at least one propulsion battery and/or electrical, control or monitoring systems in the vehicle are disabled or when the propulsion battery is disconnected or offboard. Thus, a critical condition for the at least one battery may be determined and indicated in the situations where a conventional onboard battery monitoring system would not be able to monitor the battery, for example in connection with a fire in the vehicle, an accident, or another major damage to the vehicle, its systems, or its batteries.

Hereby, potential risks of fires and other safety hazards may be indicated quickly, before they develop to actual real problems, causing material and/or human damages, also for rapidly changing conditions.

The determined critical condition/state of the propulsion battery may be indicated by utilizing the external battery monitoring module itself, e.g. by providing/emitting a visual indication, such as a light or color indication on the module, or by providing an acoustic indication, such as a specific sound, if there is a potential safety hazard or a low state of charge.

According to an aspect of the of the present invention, the above objective is achieved by an external battery monitoring module, arranged for obtaining one or more battery parameter values for a propulsion battery of a vehicle, the vehicle comprising one or more propulsion batteries providing electrical energy to at least one electrical machine, and one or more system batteries providing electrical energy to one or more electrical system of the vehicle;
the external battery monitoring module being arranged for being connectable to the propulsion battery, and for performing the following steps when an onboard battery monitoring system, comprised in the one or more electrical systems, is unable to monitor a current condition of the propulsion battery:
- providing electrical energy from the external battery monitoring module to a control unit of the propulsion battery, thereby energizing the control unit;
- obtaining, from the energized control unit, one or more battery parameter values for the propulsion battery, the one or more battery parameter values being usable for determining if a critical condition is present for the propulsion battery.

Basically, the external battery monitoring module is arranged for being connectable to a propulsion battery, such that external battery monitoring module, after being connected to the propulsion battery, takes over the communication with the propulsion battery and also takes over the monitoring of the propulsion battery when the onboard battery monitoring system is unable to perform these tasks. The external battery monitoring module has advantages corresponding to the advantages mentioned above for the methods to be performed by an external battery monitoring module.

According to an embodiment, the external battery monitoring module is arranged to be at least partially waterproof, or at least protected against water, by e.g. one or more impermeable/encapsulation/packaging layers. Hereby, the external battery monitoring module is usable also under wet conditions, such as during firefighting or the like. As a non-limiting example, the external battery monitoring module may have a water protection corresponding at least to the IP66 classification, and possibly a water protection corresponding to the IP68 classification,

According to an embodiment, the external battery monitoring module is arranged to be at least partially heat protected, e.g. by one or more heat shield/packaging layers, such that module is operable also at high temperatures, such as during a nearby fire. Thus, the external battery monitoring module is then constructed and built as a fire resistant container, which should be able to endure intense heat from adjacent fires during a longer time period, e.g. 1 to 30 minutes, and which should also be able to endure fire flames directly at the container for shorter time periods, e.g. 1 to 5 minutes.

The external battery monitoring module can be produced at low cost, and may also be arranged to cope well with water and/or heat. Therefore, one or more external battery monitoring modules may be attached/connected to one or more propulsion batteries also in potentially dangerous situation. If an external battery monitoring module is drained in water and/or experiences heat, it will probably still be able to obtain the battery parameter values needed. However, if the external battery monitoring module is impaired, e.g. is melted or the like, it is not a major economic concern anyway.

According to an embodiment of the present invention, the external battery monitoring module is a portable device being separate from the vehicle and the one or more electrical systems of the vehicle.

Thus, the external battery monitoring module may be lightweight and carriable, such that rescue personnel easily can carry it to a vehicle in essentially any situation, also in extreme situations, and can easily attach the module to the propulsion battery to be monitored. Since the external battery monitoring module may be small in size, a rescue vehicle may be equipped with a number of such small external battery monitoring modules.

According to an embodiment of the present invention, the external battery monitoring module comprises:
- a propulsion battery connector, arranged for connecting the external battery monitoring module to the propulsion battery;
- one or more of an internal battery and a connector to an external battery; and
- an energy providing arrangement, arranged for providing electrical energy from one or more of the internal battery and the external battery to the propulsion battery; and
- a module control unit, arranged for controlling the external battery monitoring module.

The propulsion battery connector, which may for example fit into and communicate through a CAN (Controller Area Network connector, makes it possible to connect the external battery monitoring module to a propulsion battery. Also, the external battery monitoring module being equipped with an internal battery and/or a connector to an external battery provides for a design flexibility regarding the sources of electrical energy for the external battery monitoring module.

According to an aspect of the present invention, the above objective is achieved by an external battery monitoring system arranged for indicating if a critical condition is present for at least one propulsion battery of a vehicle, the vehicle comprising one or more propulsion batteries providing electrical energy to at least one electrical machine, and one or more system batteries providing electrical energy to one or more electrical systems of the vehicle, the critical condition being indicated when an onboard battery monitoring system, comprised in the one or more electrical systems, is unable to monitor a current condition of the at least one propulsion battery,
the external battery monitoring system comprising:
- at least one external battery monitoring module, as herein described; and
- at least one display device, arranged for indicating a determined critical condition for the at least one propulsion battery, respectively.

The battery monitoring system has advantages corresponding to the advantages mentioned above for the method to be performed by a battery monitoring system.

According to an embodiment of the present invention, one or more of the at least one external battery monitoring module and the at least one display device are arranged for at least partly determining if a critical condition is present for the at least one propulsion battery based on the obtained one or more battery parameter values, respectively.

Hereby, a flexibility regarding the distribution of the computation complexity and battery consumption between the at least one external battery monitoring module and the at least one display device may be achieved, and possibly optimized.

It will be appreciated that all the embodiments described for the method aspects of the invention are applicable also to the corresponding external battery monitoring module and/or the external battery monitoring system aspects of the invention. Thus, all the embodiments described for the method aspects of the invention may be performed by at least one of the external battery monitoring module and the external battery monitoring system, respctively. The external battery monitoring module and the external battery monitoring system, and their embodiments have advantages corresponding to the advantages mentioned above for the methods and their embodiments.

According to an aspect of the present invention, the above-mentioned computer program and computer-readable medium are configured to implement the method and its embodiments described herein.

### Brief list of figures

Embodiments of the invention will be illustrated in more detail below, along with the enclosed drawings, where similar references are used for similar parts, and where:
Figure 1 shows an example vehicle, in which embodiments of the present invention may be implemented,
Figure 2 shows a flow chart for methods of an external battery monitoring module according to some aspects and embodiments of the present the invention,
Figure 3 shows a flow chart for methods of a battery monitoring system according to some aspects and embodiments of the present the invention,
Figure 4a-b schematically illustrates various embodiments for the battery monitoring system, and
Figure 5 shows a control unit, in which a method according to any one of the herein described aspects and embodiments may be implemented.

### Description of preferred embodiments

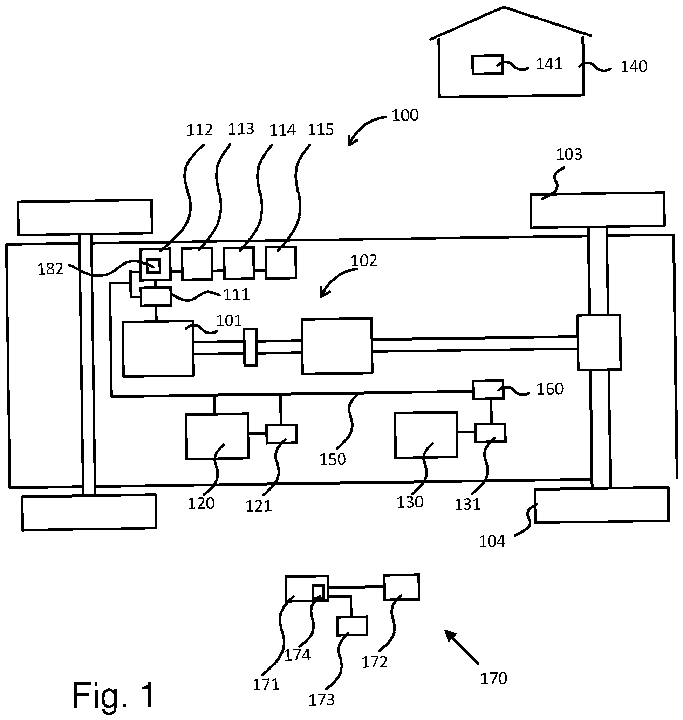

Figure 1 schematically shows an exemplary heavy vehicle 100, such as e.g. a truck or a bus, which will be used to explain the herein presented aspects and embodiments. The aspects and embodiments are, however, not limited to use in vehicles as the ones shown in figure 1, but may also be used in lighter vehicles, such as smaller trucks or buses, or passenger cars.

A vehicle 100, as partially shown schematically in Figures 1, comprises at least one pair of drive wheels 103, 104 and at least one other pair of wheels. The vehicle furthermore comprises a drivetrain 102 configured to transfer a torque between at least one power source 101, such as at least one electrical machine, and the drive wheels 103, 104. The at least one power source 101 may also include a combustion engine or a combination at least one electrical machine and at least one combustion engine, implementing a so-called hybrid drive. The at least one electrical machine 101, may be provided with electrical energy from at least one propulsion battery 112, 113, 114, 115 coupled/connected to the at least one electrical machine. Electrical energy/power used for starting a possible combustion engine may be provided by another battery 111. Thus, the electrical energy used for driving the at least one electrical machine 101 may be provided by one or more propulsion batteries 112, 113, 114, 115, as schematically illustrated in figure 1.

Also, other electrical, control and/or monitoring systems in the vehicle may utilize electrical energy. Such systems are schematically illustrated in figure 1 as an electrical control system 120 provided with electrical energy from at least one system battery 121, and, an air conditioning system, an entertainment system, or essentially any other type of electrical vehicle system denoted as 130 in figure 1, provided with electrical energy from at least one system battery 131. As stated above, a vehicle of today may comprise essentially any number of electrical systems and/or batteries, that may be distributed over various parts of the vehicle. Thus, figure 1 is only a schematical illustration of some parts of one non-limiting example of such a vehicle 100, used for explaining the herein described aspects and embodiments.

The propulsion and system batteries 111, 112, 113, 114, 115, 121, 131 may be coupled/connected to an onboard battery monitoring system 160, via some kind of connection, such as e.g. a CAN (Controller Area Network) bus 150, or the like, in a known way. This onboard battery monitoring system 160 is comprised in the one or more onboard electrical systems 120, 130, 160 of the vehicle 100, and is connected to the vehicle control systems, which is schematically illustrated as system 120 in figure 1, also via some kind of suitable connection, such as e.g. a CAN bus 150, or the like.

In this document, the electrical vehicle systems 130, the control systems 120 and the onboard battery monitoring system 160 in the vehicle are often commonly denoted "one or more electrical systems 120, 130, 160". In other words, the one or more electrical systems 120, 130, 160, or simply "the electrical systems" may include the electrical vehicle systems 130, the control systems 120 and/or the onboard battery monitoring system 160. A skilled person understands that such electrical systems in a vehicle may be relatively complex systems, which may comprise one or more control units/computers/processing arrangements, and which may be more or less distributed in the vehicle.

The vehicle internal battery monitoring system 160 may be powered by one or more of the batteries 111, 121, 131 comprised in the vehicle and not used as propulsion batteries 112, 113, 114, 115. The onboard battery monitoring system 160 monitors the state of the one or more batteries 111, 112, 113, 114, 115, 121, 131 and indicates their conditions, respectively, to the driver of the vehicle, e.g. via a user interface in the driver cab. Hereby, the driver is, under normal operation of the vehicle, alerted if for example the state of charge is low for a battery, or if there are other battery problems.

However, the onboard battery monitoring system 160 only works, i.e. is only able to determine a state of a battery, under normal operation, i.e. under normal conditions/situations in the vehicle, i.e. if the power sources 101, the electrical systems 120, 130, 160, including the onboard battery monitoring system 160 itself, and the one or more corresponding batteries 111, 112, 113, 114, 115, 121, 131 are up and running. More specifically, the onboard battery monitoring system 160 is only able to determine if a critical condition is present for at least one of the one or more propulsion batteries 112, 113, 114, 115 under normal operation conditions.

Thus, if for example, the onboard battery monitoring system 160 itself, which is arranged internal in the vehicle, or another of the electrical and/or control systems 120, 130 are disabled/out of order, then the onboard battery monitoring system 160 will be unable to determine the state of the one or more propulsion batteries 112, 113, 114, 115. Also, if at least one of the one or more propulsion batteries are disabled/out of order, the onboard battery monitoring system 160 will probably be unable to determine if a critical condition is present for such a battery. For example, in some potentially dangerous situation, such as after an accident, or during or after a fire in the vehicle, the one or more propulsion batteries and at least one of the one or more electrical systems 120, 130, 160, such as the onboard monitoring system 160, may be more or less disabled. The onboard battery monitoring system 160 can then not determine the state of the propulsion batteries 112, 113, 114, 115, although it may be crucial to quickly determine a state of the these batteries 112, 113, 114, 115, for example to avoid thermal runaway/meltdown of the batteries.

Further, when a battery 141 is detached from the vehicle 100, i.e. when the battery 141 is located offboard, i.e. separate and external from the vehicle, e.g. in a workshop, a warehouse or the like 140, it is obviously impossible for the vehicle internal battery monitoring system 160 to determine the state of the battery, since they are not coupled/connected to each other.

An external battery monitoring module 171, a display device 172, a module battery 174, and an external battery 173, of an external battery monitoring system 170 according to herein described aspects and embodiments are also schematically illustrated in figure 1. These aspects and embodiments are described in detail below.

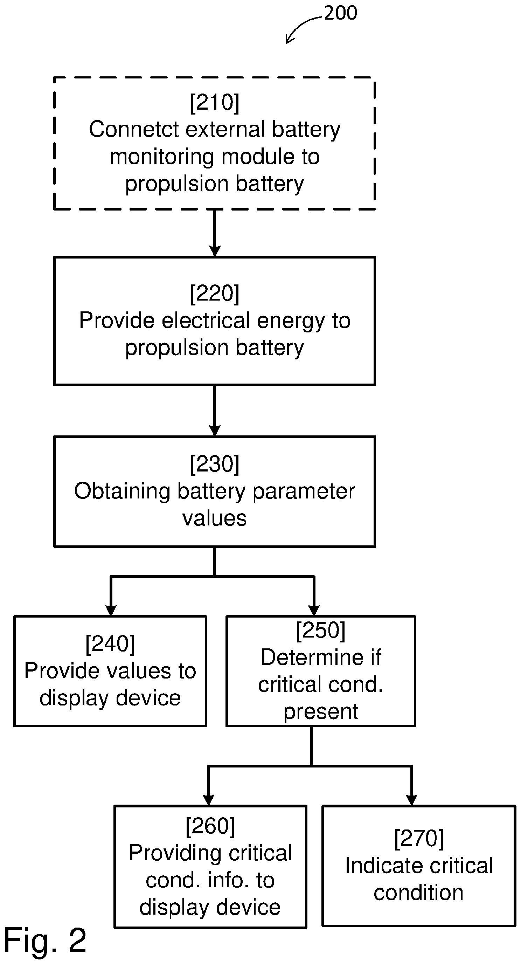

Figure 2 shows a flow chart for a method 200 to be performed by an external battery monitoring module 171 according to an aspect and some embodiments.

It should be noted that the method steps illustrated in figure 2 and described herein do not necessarily have to be executed in the order illustrated in figure 2. The steps may essentially be executed in any suitable order, as long as the physical requirements and the information needed to execute each step is available when the step is executed.

The method is to be performed when the onboard battery monitoring system 160, which is arranged in the vehicle for battery monitoring under normal conditions, is unable to monitor a current condition of a propulsion battery 112. There could be a number of reasons for why the onboard battery monitoring system 160 cannot determine the condition of the propulsion battery 112. For example, the vehicle 100 comprising the propulsion battery 112, possibly other propulsion batteries 113, 114, 115, and also one or more system batteries 111, 121, 131, may be on fire, may have been involved in an accident, or the like. As explained above, it might be essential to be able to determine the current condition of the propulsion battery 112 in such situations, in order to avoid, or at least decrease the risk for safety hazards, such as explosive fires, e.g. when assisting drivers and/or passengers in such situations

In a first step 210, the external battery monitoring module 171 is connected to a propulsion battery 112 to be monitored. This step 210 is actually not a step performed by the external battery monitoring module 171 itself, as illustrated by the dashed box for the first step 210 in figure 2. The first step 210 is instead manually performed, and may be performed by essentially any person having access to the propulsion battery 112 to be monitored, such as police, rescue, transport, service and/or warehouse personnel.

If the propulsion battery 112 to be monitored is connected to the one or more electrical systems 120 ,130, 160 of the vehicle 100 via one or more communication cables, the first step 210 includes first disconnecting such one or more communication cables before connecting the external battery monitoring module 171 to the propulsion battery 112. As explained below, the external battery monitoring module 171 is, according to an embodiment, equipped with a propulsion battery connector 175, which looks like the connector on the one or more communication cables being disconnected from the propulsion battery 112, or which at least is connectable to the to the propulsion battery 112, e.g. to the control unit 177 of the propulsion battery 112. For example, the propulsion battery connector 175 may be a CAN connector, or may be compatible with a CAN connector. Thus, the communication connection is hereby switched from being attached to the one or more electrical systems 120, 130, 160 to being attached to the external battery monitoring module 171. In other words, the external battery monitoring module 171 is hereby enabled to take over the communication with the propulsion battery 112 from the electrical systems 120, 130, 160. After having manually connected the external battery monitoring module 171 to the propulsion battery 112, the person having performed the connection may leave the vehicle 100 in general and the propulsion battery in specific, and may thereby distance himself from the potentially dangerous situation.

However, if the propulsion battery 112 is already disconnected from the electrical systems 120, 130, 160, the disconnection of one or more communication cables from the propulsion battery 112 is omitted.

In a second step 220, performed by the external battery monitoring module 171, as illustrated with the solid line box for the second step 220 in figure 2, electrical energy is provided from the external battery monitoring module 171 to a control unit 182 of the propulsion battery 112. This provided electrical energy energizes the control unit 182 of the propulsion battery. Modern propulsion batteries comprise a control unit 182, which is attached to the battery and is arranged, among other things, for monitoring the battery. Thus, the other propulsion batteries 113, 114, 115 schematically illustrated in figure 1 also include corresponding control units, although omitted in figure 1 for readability reasons.

By the second step 220, the propulsion battery 112 to be monitored is prepared for being monitored by waking up the possibly non-working control unit 182 of the propulsion battery 112. Without an active and working control unit 182 it would be impossible to determine the condition of the propulsion battery 112.

In a third step 230, performed by the external battery monitoring module 171, one or more battery parameter values for the propulsion battery 112 are obtained by the external battery monitoring module 171. These one or more battery parameter values are usable for determining if a critical condition is present for the propulsion battery 112. The one or more battery parameter values are provided to the external battery monitoring module 171 by the energized control unit 182.

Thus, by energizing the control unit 182 of the propulsion battery 112, it is made possible to obtain battery parameter values for the propulsion battery 112 which would otherwise not be able to obtain in the situations when the external battery monitoring module would come to use, i.e. in situations where it is impossible for the normal onboard battery monitoring system 160 to determine the condition of the propulsion battery.

As explained above and below in this document, the extracted battery parameter values may be used for determining if a critical condition is at hand for the propulsion battery. This determination may be performed in the external battery monitoring module and/or in another entity, such as a display device 172. Hereby, potential safety hazards may be alerted to the user of the external battery monitoring module 171 and/or the display device 172, such that dangerous situations may be avoided.

The external battery monitoring module 171 may for example be used for example after an accident or a fire, or during a fire in the vehicle. Also, it may be used when one or more of the electrical systems 120, 130, 160 in the vehicle are mechanically or electrically disabled, and/or cannot electrify and/or communicate with the control unit 182 of the propulsion battery 112 for some reason. Also, the external battery monitoring module 171 may be used when at least one of the system batteries 121, 131 or at least one of the propulsion batteries 112, 113, 114, 115 are disabled, or if at least one propulsion battery control system is disabled.

According to a battery classification scheme, a battery may be determined to be disabled if it has a physical deformation/damage having a size in the range of 1-10 mm. A battery may also be determined to be disabled if its exhaust membrane is damaged. These problems may be visually detected in some cases.

However, a battery may also be disabled even though it has no physical/visual damages, but does not function properly. For example, the battery may be unable to communicate with the onboard battery monitoring system, or does not output the relevant error codes although it cannot provide sufficient electric power. Such problems will be difficult for the normal onboard battery monitoring system to detect.

The normal onboard battery monitoring system could also be uncapable to monitor some specific conditions of the propulsion battery 112, such as fast-changing conditions, e.g. a fast increase in temperature, which could be missed by the onboard battery monitoring system because it is designed mainly for monitoring normal battery behavior/conditions.

Battery monitoring using the external battery monitoring module may also be utilized when the propulsion battery is disconnected and/or physically separated from the vehicle, e.g. if it is kept at a ware house or is transported to or from the vehicle 100.

The onboard battery monitoring system 160 would not be able to monitor the propulsion battery 112 in any of these situations, wherefore monitoring using the herein presented external monitoring module 171 is an important tool for reducing safety risks, as explained above.

According to various embodiments, the one or more battery parameter values obtained by the external battery monitoring module from the propulsion battery 112 may comprise various parameters and/or combinations of parameters, as long as these parameters are usable for determining if a critical condition is present for the propulsion battery 112. It should be noted that propulsion batteries may include a number of battery modules, where each such battery module may include a number of battery cells. As a non-limiting example, a propulsion battery may include 15 battery modules, each comprising 12 battery cells. The below mentioned battery parameter values may, according to various implementations, be related to a propulsion battery, to one or more battery module, and/or to one or more battery cells. Thus, for each propulsion battery 112, a one or more battery parameter values may be obtained and analyzed according to various embodiments.

The temperature T and/or a change in temperature ΔT of the propulsion battery 112 are battery parameter value that, according to some embodiments, may be obtained from the control unit 182 of the propulsion battery 112. A number of battery conditions may be monitored and/or determined based on these obtained values for the actual current temperature T and/or for a change in temperature ΔT over time.

An increase of the temperature T of the propulsion battery 112 may be caused by a source external from the propulsion battery 112, such as a fire adjacent to the propulsion battery 112. If the temperature T rises to high levels, this might cause fast thermal runaway in the battery 112. Such thermal runaway could result in an unstoppable explosive fire in the propulsion battery 112. It is therefore very important to monitor if any fast temperature changes are present, since these could indicate that a critical condition for the propulsion battery is soon to come.

An external physical damage to a propulsion battery 112 may also cause a slow thermal runaway, which may develop over longer time periods, e.g. days, before they lead to a critical condition for the propulsion battery 112. Such slower processes should also be monitored, for example to determine if it is safe or not to transport the propulsion battery 112 to a service station or the like.

By monitoring one or more current temperatures T of one or more of the propulsion batteries 112, 113, 114, 115, respectively, in the vehicle 100, it may also be possible for e.g. the fire department to determine where to focus its cooling efforts, i.e. to which part of the vehicle 100 it should aim its firehoses and fire extinguishers. Hereby, that the cooling water, or other cooling substance, may be more efficiently applied for maximal effect.

Further, a voltage V and/or a change of voltage ΔV over the propulsion battery 112 are other battery parameter value that, according to some embodiments, may be obtained from the control unit 182 of the propulsion battery 112. A number of battery conditions may be monitored and/or determined based on such obtained values for the actual current voltage V and/or change of voltage ΔV over time. The monitoring of the propulsion battery 112 may also, according to an embodiment, be based on a combination of voltage V values, change in voltage ΔV values, temperature T values and/or change in temperature ΔT values.

If a current voltage value V is low and/or is reduced ΔV to a lower value, this might be an indication of natural self-discharge of the propulsion battery 112. Such a self-discharge could permanently damage the propulsion battery 112. Therefore, the voltage T and/or change in voltage ΔV values should, according to an embodiment, be obtained and monitored in order to detect the critical condition before the battery has been permanently damaged.

According to some embodiments, an insulation resistance R value and/or a change of insulation resistance ΔR value for the propulsion battery 112 may be obtained from the control unit 182 of the propulsion battery 112. The insulation resistance R value and/or a change of insulation resistance ΔR value may be used for monitoring the propulsion battery 112, since abnormal values for the insulation resistance R and/or for changes in the insulation resistance ΔR could indicate that there is a cooling water leakage, a risk for short circuits, or at least one loose and/or foreign object present in the propulsion battery 112. Abnormal insulation values R, ΔR may also indicate that the battery is current-carrying and/or dangerous to transport. According to an embodiment, the insulation resistance R should have a value in the interval of 0.1 to 15 MΩ.

According to some embodiments, the obtained one or more battery parameter values for the propulsion battery, including one or more of the temperature T, the change in temperature ΔT, the voltage V, the change of voltage ΔV, the insulation resistance R and the change of insulation resistance ΔR, are compared with corresponding expected values. If the obtained one or more battery parameter values hereby deviate to a certain degree, e.g. deviates more than a threshold value, from the corresponding expected values, respectively, this could indicate that a critical condition is present.

As stated above, under normal driving conditions, the onboard battery monitoring system 160 would monitor if the batteries of the vehicle are working properly, and would then perform some of the above monitoring procedures. However, when the herein presented external battery monitoring module 171 or external battery monitoring system 170 are used, the onboard battery monitoring system 160 cannot perform its normal battery monitoring duties. The one or more battery parameter values for the propulsion battery 112 therefore have to be obtained from the propulsion battery 112 by the external battery monitoring module 171 for the propulsion battery 112 to be monitored at all.

Further, the onboard battery monitoring system 160 is dedicated for monitoring more normal, i.e. non-critical, conditions of the batteries during normal operation conditions for the vehicle. For example, the herein presented external battery monitoring module 171 and external battery monitoring system 170, respectively, are specifically arranged for detecting rapidly developing critical conditions, such as e.g. a quick thermal runaway, whereas the onboard battery monitoring system 160 often cannot detect such rapid developments. Thus, the herein presented external battery monitoring module 171 and external battery monitoring system 170, respectively, will be able to detect critical conditions that would not have been detectable by the onboard battery monitoring system 160.

As stated above, the electrical energy is provided to the control unit 182 of the propulsion battery 112 in the second step 220 of the method 200. According to an embodiment, this electrical energy is provided to the control unit 182 from at least a module battery 174 arranged within the external battery monitoring module 171, as schematically illustrated in figure 1.

According to an embodiment, the electrical energy is provided to the control unit 182 from an external battery 173. This external battery 173 is arranged offboard the vehicle 100 and separate from the external battery monitoring module 171. The external battery 173 is then connected to the external battery monitoring module 171, such that the electrical energy is provided to the control unit 182 of the propulsion battery 112 via the external battery monitoring module 171, as also illustrated in figure 1.

According to an embodiment, the electrical energy may be provided at least partly from the module battery 174 and at least partly from the external battery 173.

As explained above, the ability of the external battery monitoring module to energize the control unit 182 of the possibly disabled propulsion battery 112, makes it possible obtain the one or more battery parameters being necessary for determining if a critical condition is present.

According to an embodiment, also shown in figure 2 as a possible option after the third step 230, the external battery monitoring module 171 is further arranged for, i.e. the method 200 further comprises the fourth step 240 of, providing the one or more battery parameter values, having been obtained by the external battery monitoring module 171 from the control unit 182 of the propulsion battery 112, to a display device 172 schematically illustrated in figure 1. Hereby, the display device 172 has access to these one or more battery parameter values, and is able to, based on these values, determine if a critical condition is present for the propulsion battery 112.

Thus, according to this embodiment, the external battery monitoring module 171 is only arranged for obtaining the battery parameter values from the control unit of the propulsion battery, and for sending them to the display device 172. Hereby, the external battery monitoring module 171 may be a relatively low complexity and less costly sensor device, which software seldomly has to be updated.

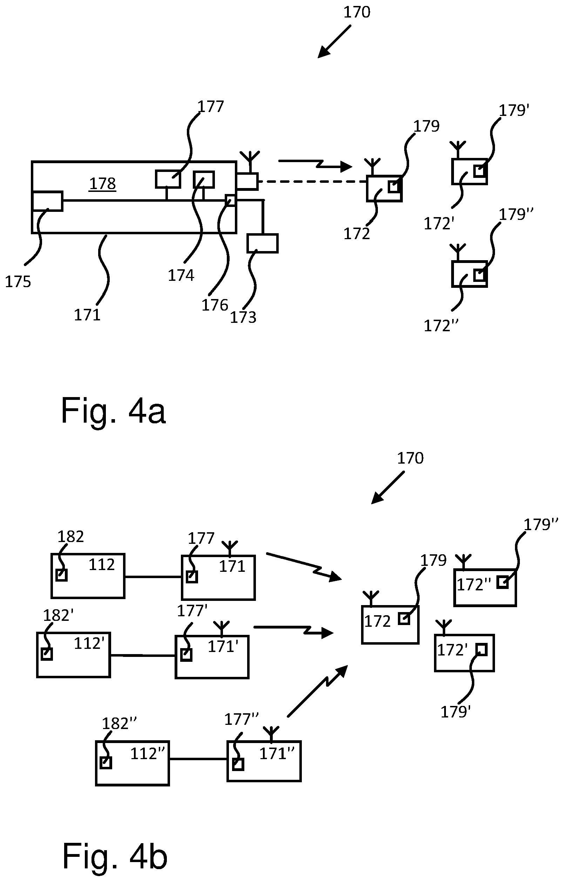

The obtained battery parameter values may be transferred/transmitted to the display device 172 in a number of ways, e.g. via a wired and/or wireless connection, as schematically illustrated in, and explained in connection with, figures 4a-b. The usage of a wired or wireless connection may be chosen depending on the urgency of the situation, where the safety of the user may be taken into account in the choice.

According to an embodiment, also shown in figure 2 as a possible option after the third step 230, the external battery monitoring module 171 is further arranged for, i.e. the method 200 further comprises the further fifth step 250 of, determining if a critical condition is present for the propulsion battery 112 based on the obtained one or more battery parameter values. Thus, the external battery monitoring module 171, may according to the embodiment itself analyze the obtained battery parameter values and determine the condition of the propulsion battery 112.

According to an embodiment, shown in figure 2 as a possible option after the fifth step 250, the external battery monitoring module 171 is further arranged for, i.e. the method 200 further comprises the further sixth step 260 of, providing information related to if a critical condition is present for the propulsion battery 112 to the display device 172. Thus, information related to the battery condition determined in the fifth step 250 is here sent/transmitted to the display device 172 by a suitable transmission arrangement, as described below. The display device 172 is then arranged for indicating/displaying such a determined critical condition in a suitable fashion, e.g. by a visual and/or audible interface indication of the display device 172.

According to an embodiment, shown in figure 2 as a possible option after the fifth step 250, the external battery monitoring module 171 is further arranged for, i.e. the method 200 further comprises the further seventh step 270 of, indicating a determined critical condition for the propulsion battery 112 itself, e.g. by a suitable visual and/or audible indication, possibly provided by a lamp, a speaker or the like. For example, a first sound, such as an audible alarm, may be given if temperatures above a threshold value are monitored, and a second sound, such as an alarming beep, may be given if the state of charge of the propulsion battery is lower than a threshold value.

Thus, the external battery monitoring module 171 is always arranged to be the entity that obtains 230 the battery parameter values from the propulsion battery 112. Then, according to various embodiments, the external battery monitoring module 171 may either be arranged to provide 240 these values to the display device 172, or to itself determine 250 if a critical condition is present.

If the external battery monitoring module 171 is arranged for determining 250 if a critical condition is present, then it may either be arranged to provide 260 information related to this critical condition to the display device 172 and/or be arranged to itself indicate 270 the determined critical condition.

It should be noted that the sixth 260 and seventh 270 steps may both be performed, such that a critical condition is indicated both by the external battery monitoring module 171 and by the display device 172.

It should also be noted that the fourth 240 and fifth 250 steps may both be performed, such that a possible presence of a critical condition may be determined in both the external battery monitoring module 171 and the display device 172, or is determined at least partly in the external battery monitoring module 171 and at least partly the display device 172.

The various embodiments for the implementation of the method 200 have various advantages, respectively. In some situations, it is essential for rescue personnel to be presented with an indication of a determined critical condition directly at the propulsion battery 112. For example, an indication provided by the external battery monitoring module 171, may directly and quickly warn rescue personnel to run for cover if necessary. In less extreme situations, it might be better to get the indication of a critical condition via the display device 172.

Also, by choosing a suitable implementation, the additional software complexity and updating issues may be located in either of the external battery monitoring module 171 and the display device 172, or is divided between the external battery monitoring module 171 and the display device 172. Thus, the herein described various embodiments may be utilized such a suitable cost and complexity level is reached for the external battery monitoring module 171 and the display device 172.

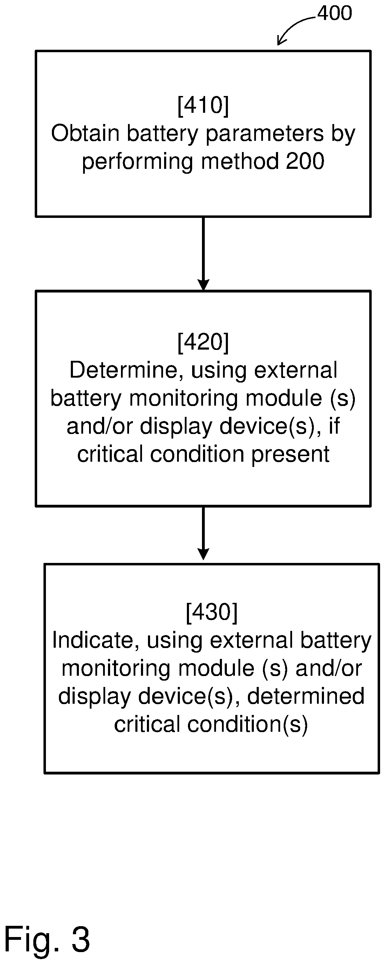

Figure 3 shows a flow chart for a method 400 to be performed by a battery monitoring system 170, which includes at least one external battery monitoring module 171, as herein described, and at least one display device 172, as herein described. The battery monitoring system 170 is arranged for determining/detecting and indicating if a critical condition is present for at least one propulsion battery 112 of a vehicle 100. As mentioned above, the vehicle 100 may comprise a number of batteries of different kinds, comprising one or more propulsion batteries 112, 113, 114, 115, arranged for providing electrical energy to at least one electrical machine 101 in the vehicle, and one or more system batteries 121, 131 providing electrical energy to one or more electrical systems 120 ,130, 160, including any control systems, of the vehicle.

It should be noted that the method steps illustrated in figure 3 and described herein do not necessarily have to be executed in the order illustrated in figure 3. The steps may essentially be executed in any suitable order, as long as the physical requirements and the information needed to execute each step is available when the step is executed.

In a first step 410, the above-described aspect or embodiments of the method 200, is utilized for obtaining one or more battery parameter values for at least one propulsion battery 112, respectively. Thus, at least one external battery monitoring module is used for obtaining one or more battery parameter values usable for determining if a critical condition is present for the at least one propulsion battery 112, respectively. In other words, for each one of the at least one propulsion battery to be monitored, which could be one or more of the propulsion batteries 112, 113, 114, 115 illustrated in figure 1, the above-described method 200 is used for obtaining such battery parameter values for that propulsion battery. However, in order to simplify the explanation of the method, one propulsion battery 112 is to be monitored in this example.

In a second step 420, it is determined if a critical condition is present for the at least one propulsion battery 112, respectively. This determination is performed as herein described, based on the obtained one or more battery parameter values for each one of the at least one propulsion battery 112. The at least one external battery monitoring module 171 and/or the at least one display device 172 are utilized for performing this determination. Thus, as herein explained, the at least one external battery monitoring module 171 may be arranged for at least partly performing the determination of if a critical condition is present. Correspondingly, the at least one display device 172 may be arranged for at least partly performing the determination of if a critical condition is present. The at least one external battery monitoring module 171 and the at least one display device 172 may also work together to perform this determination.

In a third step 430, any determined critical conditions for the at least one propulsion battery 112, respectively, is indicated to a user of the system. The indication may be provided by the at least one external battery monitoring module 171 and/or the at least one display device 172. As herein explained, the at least one external battery monitoring module 171 may be arranged for at least partly indicating such a present critical condition. Also, the at least one display device 172 may be arranged for at least partly indicating such a critical condition. The at least one external battery monitoring module 171 and the at least one display device 172 may further both indicate a critical condition.

According to an aspect, an external battery monitoring module 171 is presented, and schematically illustrated in figures 1 and 4a. The external battery monitoring module 171 is arranged for obtaining one or more battery parameter values for a propulsion battery 112 of a vehicle 100 including one or more propulsion batteries 112, 113, 114, 115 providing electrical energy to at least one electrical machine 101. The vehicle may also include one or more system batteries 121, 131 providing electrical energy to one or more electrical system 120, 130, 160 of the vehicle 100, but the external battery monitoring module 171 is arranged for obtaining battery parameter values for a vehicle propulsion battery 112.

The external battery monitoring module 171 is arranged for being connectable to the propulsion battery 112 to be monitored when an onboard battery monitoring system 160 of the vehicle is not able to monitor a current condition of the propulsion battery 112, e.g. due to an extreme situation, such as after an accident or a fire, as explained above. Thus, when the onboard battery monitoring system 160 is useless, the external battery monitoring module 171 may takeover the battery monitoring after it has been manually connected to the possibly damaged propulsion battery 112. The manually performed connection of the external battery monitoring module 171 to the propulsion battery 112 may be performed by first detaching an onboard communication cable/connector from the propulsion battery, which is used for onboard communication and/or monitoring of the propulsion battery under normal conditions. This onboard communication cable/connector may e.g. be a CAN (Controller Area Network) connector. Then, the external battery monitoring module 171 is manually connected to the propulsion battery instead, e.g. by attaching a similar cable/connector 175 to the propulsion battery 112, where this cable/connection 175 is comprised in the external battery monitoring module 171 and facilitates communication between the control unit 182 of the propulsion battery 112. cable/connection 175 thus also facilitates monitoring of the propulsion battery 112 performed by the external battery monitoring module 171.

The external battery monitoring module 171 is further arranged for providing 220 electrical energy from the external battery monitoring module 171 to a control unit 182 of the propulsion battery 112. The control unit 182 is hereby energized and can start communicating with the external battery monitoring module 171. Depending on the propulsion battery 112 and/or its control unit 182, the electrical energy is provided at a suitable voltage, e.g. as a 24 V supply provided instead of the 24 V normally provided by the system batteries.

The external battery monitoring module 171 is also arranged for obtaining 230, from the energized control unit 182, one or more battery parameter values for the propulsion battery 112. These one or more battery parameter values may then be used for determining if a critical condition is present for the propulsion battery 112, or not, as explained above.

According to various embodiments, the external battery monitoring module 171 may further be arranged for indicating a determined critical condition for the propulsion battery 112 in a suitable fashion itself, e.g. by a visual and/or audible indication devices. Such devices may include one or more lamps, speakers, or the like.

According to an embodiment, the external battery monitoring module 171 is a portable device being separate from the vehicle 100 and the one or more electrical systems 120 ,130, 160 of the vehicle. Thus, the external battery monitoring module 171 may be a relatively small sensor device, which is lightweight, small in size, and inexpensive, and which may be easily carried by rescue personnel or the like. Rescue personnel vehicles may be equipped with sets of multiple external battery monitoring modules, possibly positioned in charging stations, such that they are ready for use at arrival to a site of an accident or the like.

According to an embodiment, the external battery monitoring module 171 comprises a propulsion battery connector 175, schematically illustrated in figure 4a. The propulsion battery connector 175 is arranged for connecting the external battery monitoring module 171 to the propulsion battery 112. As mentioned above, an onboard connector usually used within the vehicle under normal driving conditions should then be detached from the propulsion battery 112 before the propulsion battery connector 175 is connected to the propulsion battery 112. When the propulsion battery connector 175 is attached to the propulsion battery 112, the communication with the propulsion battery is switched from the onboard electrical systems 120, 130, 160 to the external battery monitoring module 171. Thus, the external battery monitoring module 171 hereby takes over the communication and monitoring of the propulsion battery 112.

According to an embodiment, the external battery monitoring module 171 comprises an internal battery 174 and/or a connector 176 to an external battery 173. Thus, for the external battery monitoring module 171 to be able to energize the control unit 182 of the propulsion battery 112, and for communication with, and monitoring of, the propulsion battery 112, electrical energy is needed. This energy may be provided by the internal battery 174 or may be provided by the external battery 173, or may be provided by a combination of the internal battery 174 and the external battery 173.

According to an embodiment, the external battery monitoring module 171 comprises an energy providing arrangement 178. This energy providing arrangement 178 is arranged for providing electrical energy from one or more of the internal battery 174 and the external battery 173 to the propulsion battery 112.

According to an embodiment, the external battery monitoring module 171 comprises a transmission arrangement, which is arranged for communication with the least one display device 172, 172', 172", where each display device 172, 172', 172" comprises a display control unit 179, 179', 179". This communication may be a cable communication and/or may be provided by usage of a suitable wireless communication, as schematically illustrated in figure 4a.

According to an embodiment, the external battery monitoring module 171 comprises a module control unit 177, which is arranged for controlling the external battery monitoring module 171. Thus, the module control unit is arranged for controlling the external battery monitoring module 171 such that it performs the herein described method steps according to the herein presented aspects and embodiments.

According to an embodiment, the external battery monitoring module 171, or at least one or more of the propulsion battery connector 175, the internal battery 174, the connector 176, the external battery 173 and the module control unit 177, is arranged with some kind of water protection, such as one or more impermeable/encapsulation layers.

According to an embodiment, the external battery monitoring module 171, or at least one or more of the propulsion battery connector 175, the internal battery 174 the connector 176, the external battery 173 and the module control unit 177, is arranged with some kind of heat protected, such as one or more heat shields.

If an external battery monitoring module is drained with water, e.g. during firefighting, and/or experiences heat, e.g. during fire, it will probably still be able to obtain the battery parameter values needed. However, if the external battery monitoring module is impaired under these extreme conditions, e.g. is melted or disabled in another way, it is not a major economic concern, since the external battery monitoring module can be produced at low cost.

An external battery monitoring system 170 according to an aspect, which is arranged for indicating if a critical condition for at least one propulsion battery 112, 112', 112" of a vehicle 100, is presented and illustrated schematically in figures 1 and 4a-b.

As mentioned above, the vehicle 100 comprises one or more propulsion batteries 112, 113, 114, 115 providing electrical energy to at least one electrical machine 101, and one or more system batteries 111, 121, 131 providing electrical energy to one or more electrical systems 120, 130, 160 of the vehicle 100.

The external battery monitoring system 170 is only monitoring the at least one propulsion battery 112, 112', 112" when the onboard battery monitoring system 160 is unable to monitor a current condition of the at least one propulsion battery 112, 112', 112". Thus, one 112 or multiple 112, 112', 112" possibly damaged propulsion batteries may be monitored by the system 170, as schematically illustrated in figure 4b.

The external battery monitoring system 170 comprises at least one external battery monitoring module 171, 171', 171" as claimed described above. Thus, the system may comprise essentially any number of external battery monitoring modules 171, 171', 171", each possibly comprising a module control unit 177, 177', 177" and being otherwise arranged as described in this document. Thus, each one of the external battery monitoring modules 171, 171', 171" is arranged for performing the above mentioned second 220 and third 230 method steps, and possibly also for performing one or more of the above mentioned fifth 250, sixth 260 and seventh 270 method steps. According to a non-limiting embodiment, at least 15 external battery monitoring modules 171, 171', 171" may be connected to a display device 172, 172', 172".

The external battery monitoring system 170 also comprises at least one display device 172, 172', 172", arranged for indicating 440 a determined critical condition for the at least one propulsion battery 112, 112', 112", respectively. According to an embodiment, each display device 172, 172', 172" comprises a display control unit 179, 179', 179", which may be arranged for performing the indication of determined critical conditions.

According to various embodiments, the at least one external battery monitoring module 171, 171', 171" may be arranged for at least partly determining 420 if a critical condition is present for the at least one propulsion battery 112, 112', 112", respectively, e.g. by usage of module control units 177, 177', 177" arranged for performing the detection of critical conditions.

The at least one display device 172, 172', 172" may also be arranged for at least partly determining 420 if a critical condition is present for the at least one propulsion battery 112, 112', 112", e.g. by usage of display control units 179, 179', 179" arranged for performing the detection of critical conditions. The least one external battery monitoring module 171, 171', 171" and the at least one display device 172, 172', 172" may further be arranged for performing the detection 420 of a possible critical condition in cooperation.

Further, according to various embodiments, the indication 430 of a determined critical condition may be handled at least partly by the least one external battery monitoring module 171, 171', 171" and/or the at least one display device 172, 172', 172", e.g. controlled by the module control units 177, 177', 177" and the display control units 179, 179', 179", respectively. Hereby, recues personnel close to the vehicle and a damaged propulsion battery may be immediately alerted by the external battery monitoring module 171 when a dangerous situation arises and/or personnel positioned farther away from the vehicle are able to safely monitor the battery conditions from a distance.

As schematically illustrated in figure 4a-b, the external battery monitoring system 170 may comprise essentially any number of external battery monitoring modules 171, 171', 171" and essentially any number of display devices 172, 172', 172", that are able to communicate with each other, via wires and/or wireless connections.

Hereby, one external battery monitoring module 171, 171', 171" may be attached to each propulsion battery 112, 112', 112" which should be monitored for a possible critical condition, for example when rescue personnel reach a vehicle on fire. Then, a critical condition may be indicated more or less immediately already when the external battery monitoring module is attached to a propulsion battery. Also, the critical condition may be indicated may on one or more display devices communicating with the attached external battery monitoring modules 171, 171', 171".

Further, the external battery monitoring module 171 and the external battery monitoring system 170 may be arranged for performing all of the above, in the claims, and in the herein described embodiments method steps of the external battery monitoring module 171 and the external battery monitoring system 170, respectively. The external battery monitoring module 171 and the external battery monitoring system 170 are hereby provided with the above-described advantages for each respective embodiment.

The person skilled in the art will appreciate that a the herein described embodiments for obtaining one or more battery parameter values for a propulsion battery and for indicating if a critical condition is present for at least one propulsion battery may also be implemented in a computer program, which, when it is executed in a computer, instructs the computer to execute the method. The computer program is usually constituted by a computer program product 503 stored on a non-transitory/nonvolatile digital storage medium, in which the computer program is incorporated in the computer-readable medium of the computer program product. The computer-readable medium comprises a suitable memory, such as, for example: ROM (Read-Only Memory), PROM (Programmable Read-Only Memory), EPROM (Erasable PROM), Flash memory, EEPROM (Electrically Erasable PROM), a hard disk unit, etc.

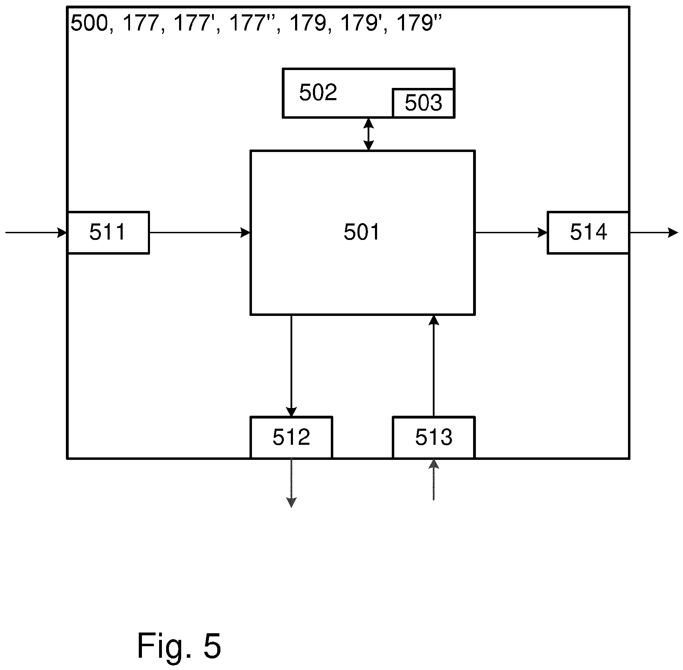

Figure 5 shows in schematic representation a control unit 500, 177, 177', 177", 179, 179', 179", which may also be denoted processing arrangement, and which may correspond to or may include one or more of the above-mentioned control units 177, 177', 177", 179, 179', 179", illustrated in figures 1 and 4a-b. The control units 177, 177', 177", 179, 179', 179" may be arranged/configured for performing/executing one or more of the above-mentioned method steps 220, 230, 240, 250, 260, 270, 410, 420, 430. The control unit 500, 177, 177', 177", 179, 179', 179" comprises a computing unit 501, which can be constituted by essentially any suitable type of processor or microcomputer, for example a circuit for digital signal processing (Digital Signal Processor, DSP), or a circuit having a predetermined specific function (Application Specific Integrated Circuit, ASIC). The computing unit 501 is connected to a memory unit 502 arranged in the control unit 500, 177, 177', 177", 179, 179', 179", which memory unit provides the computing unit 501 with, for example, the stored program code and/or the stored data which the computing unit 501 requires to be able to perform computations. The computing unit 501 is also arranged to store partial or final results of computations in the memory unit 502.

In addition, the control unit 500, 177, 177', 177", 179, 179', 179" is provided with devices 511, 512, 513, 514 for receiving and transmitting input and output signals. These input and output signals may comprise waveforms, impulses, or other attributes which, by the devices 511, 513 for the reception of input signals, can be detected as information and can be converted into signals which can be processed by the computing unit 501. These signals are then made available to the computing unit 501. The devices 512, 514 for the transmission of output signals are arranged to convert signals received from the computing unit 501 in order to create output signals by, for example, modulating the signals, which can be transmitted to other parts of the herein described modules and/or systems.

Each of the connections to the devices for receiving and transmitting input and output signals can be constituted by one or more of a cable; a data bus, such as a CAN bus (Controller Area Network bus), a MOST bus (Media Orientated Systems Transport bus), or some other bus configuration; or by a wireless connection. A person skilled in the art will appreciate that the above-stated computer can be constituted by the computing unit 501 and that the above- stated memory can be constituted by the memory unit 502.

According to various embodiments, the present invention may be implemented by the one or more above mentioned control units/devices 500, 177, 177', 177", 179, 179', 179".

Here and in this document, control units are often described as being arranged for performing steps of the method according to the herein described aspects and embodiments. This also includes that the control units are designed to and/or configured to perform these method steps. For example, the control units 500, 177, 177', 177", 179, 179', 179" may comprise one or more control entities arranged for performing one or more of the herein described method steps 220, 230, 240, 250, 260, 270, 410, 420, 430, respectively. These control entities may for example correspond to groups of instructions, which may be in the form of programming code, that are input into, and are utilized/executed by the processor/computing unit 501 of the control unit 500, 177, 177', 177", 179, 179', 179" when the entities are active and/or are utilized for performing their method steps, respectively. Such control entities may be implemented as separate entities in multiple control units, or may be logically separated but physically implemented in the same control unit, or may be both logically and physically arranged together.

The present invention is not limited to the above-described embodiments. Instead, the present invention relates to, and encompasses all different embodiments being included within the scope of the independent claims.

## Claims

1. A method (200) to be performed by an external battery monitoring module (171) for obtaining one or more battery parameter values for a propulsion battery (112) of a vehicle (100), the vehicle (100) comprising one or more propulsion batteries (112, 113, 114, 115) providing electrical energy to at least one electrical machine (101), and one or more system batteries (121, 131) providing electrical energy to one or more electrical systems (120, 130, 160) of the vehicle (100);
the method (200) comprising the following steps, performed when an onboard battery monitoring system (160), comprised in the one or more electrical systems (120, 130, 160), is unable to monitor a current condition of the propulsion battery (112):
- providing (220) electrical energy from the external battery monitoring module (171) to a control unit (182) of the propulsion battery (112), thereby energizing the control unit (182);
- obtaining (230), from the energized control unit (182), one or more battery parameter values for the propulsion battery (112), the one or more battery parameter values being usable for determining if a critical condition is present for the propulsion battery (112).

2. The method (200) as claimed in claim 1, wherein the onboard battery monitoring system (160) is unable to monitor the current condition of the propulsion battery (112) because of one or more in the group of:
- at least one of the one or more electrical systems (120, 130, 160) is mechanically disabled;
- at least one of the one or more electrical systems (120, 130, 160) is electrically disabled;
- at least one of the one or more system batteries (121, 131) is disabled;
- at least one propulsion battery control system, comprised in the one or more electrical systems (120, 130, 160), is disabled;
- the onboard battery monitoring system (160) is unable to communicate with the control unit (182) of the propulsion battery (112);
- the onboard battery monitoring system (160) is unable to electrify the control unit (182) of the propulsion battery (112);
- the onboard battery monitoring system (160) is uncapable to monitor a specific condition of the propulsion battery (112);
- the propulsion battery (112) is disconnected from the one or more electrical systems (120, 130, 160); and
- the propulsion battery (112) is physically separated from the vehicle (100).

3. The method (200) as claimed in any one of claims 1-2, wherein the one or more battery parameter values comprise one or more values in the group of:
- a temperature (T) for the propulsion battery (112);
- a change in temperature (ΔT) for the propulsion battery (112);
- a voltage (V) over the propulsion battery (112);
- a change of voltage (ΔV) over the propulsion battery (112);
- an insulation resistance (R) for the propulsion battery (112); and
- a change of insulation resistance (ΔR) for the propulsion battery (112).

4. The method (200) as claimed in any one of claims 1-3, wherein the electrical energy is provided to the control unit (182) from at least one source in the group of:
- a module battery (174), arranged within the external battery monitoring module (171); and
- an external battery (173), arranged offboard the vehicle (100) and connected to the external battery monitoring module (171), such that the electrical energy is provided to the control unit (182) via the external battery monitoring module (171).

5. The method (200) as claimed in any one of claims 1-4, wherein the method further comprises the step of:
- providing (240) the obtained one or more battery parameter values to a display device (172), such that the display device (172) can determine if a critical condition is present for the propulsion battery (112) based on the obtained one or more battery parameter values.

6. The method (200) as claimed in any one of claims 1-5, wherein the method further comprises the step of:
- determining (250) if a critical condition is present for the propulsion battery (112) based on the obtained one or more battery parameter values.

7. The method (200) as claimed in claim 6, wherein the method further comprises at least one step in the group of:
- providing (260) information related to if a critical condition is present for the propulsion battery (112) to a display device (172), such that the display device (172) can indicate a determined critical condition; and
- indicating (270) a determined critical condition for the propulsion battery (112).

8. A method (400), to be performed by an external battery monitoring system (170) including at least one external battery monitoring module (171) and at least one display device (172), for indicating if a critical condition is present for at least one propulsion battery (112) of a vehicle (100), the vehicle (100) comprising one or more propulsion batteries (112, 113, 114, 115) providing electrical energy to at least one electrical machine (101), and one or more system batteries (121, 131) providing electrical energy to one or more electrical systems (120 ,130, 160) of the vehicle (100);
the method (400) being performed when an onboard battery monitoring system (160), comprised in the one or more electrical systems (120 ,130, 160), is unable to monitor a current condition of the at least one propulsion battery (112), and comprising:
- performing (410), by usage of the at least one external battery monitoring module (171), the steps of the method (200) according to any one of claims 1-7, for obtaining one or more battery parameter values for at least one propulsion battery (112), respectively;
- determining (420), by usage of one or more of the at least one external battery monitoring module (171) and the at least one display device (172), if a critical condition is present for the at least one propulsion battery (112), based on the obtained one or more battery parameter values, respectively; and
- indicating (430), by usage of one or more of the at least one external battery monitoring module (171) and the at least one display device (172), a determined critical condition for the at least one propulsion battery (112), respectively.

9. An external battery monitoring module (171), arranged for obtaining one or more battery parameter values for a propulsion battery (112) of a vehicle (100), the vehicle (100) comprising one or more propulsion batteries (112, 113, 114, 115) providing electrical energy to at least one electrical machine (101), and one or more system batteries (121, 131) providing electrical energy to one or more electrical system (120, 130, 160) of the vehicle (100);
the external battery monitoring module (171) being arranged for being connectable to the propulsion battery (112), and for performing the following steps when an onboard battery monitoring system (160), comprised in the one or more electrical systems (120, 130, 160), is unable to monitor a current condition of the propulsion battery (112):
- providing (220) electrical energy from the external battery monitoring module (171) to a control unit (182) of the propulsion battery (112), thereby energizing the control unit (182);
- obtaining (230), from the energized control unit (182), one or more battery parameter values for the propulsion battery (112), the one or more battery parameter values being usable for determining if a critical condition is present for the propulsion battery (112).

10. The external battery monitoring module (171) as claimed in claim 9, wherein the external battery monitoring module (171) is a portable device being separate from the vehicle (100) and the one or more electrical systems (120 ,130, 160) of the vehicle.

11. The external battery monitoring module (171) as claimed in any one of claims 9-10, wherein the external battery monitoring module (171) comprises:
- a propulsion battery connector (175), arranged for connecting the external battery monitoring module (171) to the propulsion battery (112);
- one or more of an internal battery (174) and a connector (176) to an external battery (173); and
- an energy providing arrangement (178), arranged for providing electrical energy from one or more of the internal battery (174) and the external battery (173) to the propulsion battery (112); and
- a module control unit (177), arranged for controlling the external battery monitoring module (171).

12. An external battery monitoring system (170) arranged for indicating if a critical condition is present for at least one propulsion battery (112, 112', 112") of a vehicle (100), the vehicle (100) comprising one or more propulsion batteries (112, 113, 114, 115) providing electrical energy to at least one electrical machine (101), and one or more system batteries (111, 121, 131) providing electrical energy to one or more electrical systems (120, 130, 160) of the vehicle (110), the critical condition being indicated when an onboard battery monitoring system (160), comprised in the one or more electrical systems (120, 130, 160), is unable to monitor a current condition of the at least one propulsion battery (112, 112', 112"),
the external battery monitoring system (170) comprising:
- at least one external battery monitoring module (171, 171', 171"), as claimed in any one of claims 9-11; and
- at least one display device (172, 172', 172"), arranged for indicating (440) a determined critical condition for the at least one propulsion battery (112, 112', 112"), respectively.

13. The external battery monitoring system (170) as claimed in claim 12, wherein one or more of the at least one external battery monitoring module (171, 171', 171") and the at least one display device (172, 172', 172") are arranged for at least partly determining (420) if a critical condition is present for the at least one propulsion battery (112, 112', 112) based on the obtained one or more battery parameter values, respectively.

14. A computer program comprising instructions which, when the program is executed by a computer, cause the computer to carry out the method according to any one of claims 1-8.

15. A computer-readable medium comprising instructions which, when executed by a computer, cause the computer to carry out the method according to any one of claims 1-8.
